# EUROPEAN PATENT SPECIFICATION

(11) **EP 3 028 402 B1**
(45) Date of publication and mention of the grant of the patent: **23.11.2022**
(21) Application number: 14831193.9
(22) Date of filing: 31.07.2014
(51) Int. Cl.: G06F 8/61, G06F 8/65, H04W 4/70, G06F 9/4401, G06F 9/455

(54) **DYNAMIC SENSOR DRIVER LOADING OVER A WIRELESS NETWORK**
DYNAMISCHES SENSORTREIBERLADEN ÜBER EIN DRAHTLOSES NETZWERK
CHARGEMENT DYNAMIQUE DE PILOTES DE CAPTEURS VIA UN RÉSEAU SANS FIL

(30) Priority: 31.07.2013 US 201361860776 P
(43) Date of publication of application: 08.06.2016
(73) Proprietor: Smiths Detection Inc., Edgewood, MD 21040 (US)
(72) Inventor: WROBLEWSKI, Frank, Gaithersburg, MD 20878 (US); BRUNS, Travis, Myersville, MD 21773 (US); GOLDMAN, Heather, Westminster, MD 21157 (US); GIROD, Bob, Glenelg, MD 21737 (US); MCLOUGHLIN, John, Annapolis, MD 21409 (US); MILLER, William, Boyds, MD 20841 (US); EDWARDS, John, Frederick, MD 21703 (US)
(74) Representative: Leach, Sean Adam
(86) International application number: PCT/US2014/049074
(87) International publication number: WO 2015/017628

(56) References cited:
- KR-A- 20070 096 316
- US-A1- 2003 076 242
- US-A1- 2005 210 340
- US-A1- 2007 281 758
- US-A1- 2008 258 880
- US-A1- 2011 131 320
- US-A1- 2011 193 677
- US-B1- 6 282 711
- ATHANASSIOS BOULIS ET AL: "Design and Implementation of a Framework for Efficient and Programmable Sensor Networks", USENIX,, 26 June 2003 (2003-06-26), pages 1-15, XP061012270, DOI: 10.1145/1066116.1066121 [retrieved on 2003-06-26]
- Anonymous: "Introducing Sensa-LINX(TM)", CBRNe World News, 10 July 2012 (2012-07-10), pages 1-3, XP055513619, Retrieved from the Internet: URL:http://www.cbrneworld.com/news/introdu cing_sensa_linx_by_smiths_detection#axzz5T MDbcoRz [retrieved on 2018-10-09]

## Description

### BACKGROUND

In the face of a possibility of a chemical, biological, radiological, nuclear and/or high-yield explosives (CBRNE) incident, it is imperative to quickly and accurately present local commanders with an integrated sensor picture. Monitoring a perimeter or protecting an event from such incidents often involves a high element of risk for human personnel and requires a high degree of exposure in potential hot zones. The ability to deploy unmanned sensors, by using wireless sensor networks, is important. If the ability of these wireless sensor networks is suitably explored and harnessed, these networks may be able to reduce or eliminate the need for human involvement in information gathering in certain civilian and military applications. The need to use CBRNE sensors and create networks, permanent or ad hoc, is an established and evolving way of extending situational awareness.

United States Patent Application No: US 2011/0131320 A1 describes an apparatus and method of dynamically managing a sensor module on a sensor node in a wireless sensor network. The apparatus includes an update unit, a request unit, and a transmission unit. If a change occurs in sensor data corresponding to each sensor node stored in a sensor information storage server, the update unit receives the sensor data from the sensor information storage server, and transmits the received sensor data to the corresponding sensor node.

### SUMMARY

Aspects of the present invention are set out in the appended independent claims. In particular, independent claim 1 defines a chemical, biological, radiological, nuclear and high-yield explosives, CBRNE, system, and independent claim 5 defines a method for providing dynamic sensor driver loading over a wireless network. Optional features are set out in the appended dependent claims.

A method operation of a sensor node for providing dynamic sensor driver loading over a wireless network is disclosed herein. The method includes detecting a connected sensor. The method further includes identifying a driver suitable for communicating with the detected sensor. The method further includes dynamically loading the sensor driver via the wireless network, the sensor driver being transmitted by a remotely located computing device. The method further includes executing the sensor driver for promoting communication with the connected sensor.

A method for providing dynamic sensor driver loading over a wireless network is disclosed herein. The method includes transmitting a sensor driver from a computing device to a base station node. The method further includes packaging the sensor driver via the base station node and transmitting the packaged driver from the base station node to a sensor node via the wireless network. The method further includes unpackaging the sensor driver via the sensor node. The method further includes executing the sensor driver via the sensor node for promoting communication with a sensor connected to the sensor node.

A system for providing dynamic sensor driver loading over a wireless network is disclosed herein. The system includes a computing device. The system further includes a base station node communicatively coupled with the computing device. The system further includes a sensor node(s) communicatively coupled with the base station node via a wireless network. The system further includes a sensor(s) communicatively coupled with the sensor node(s). The computing device is configured to transmit a sensor driver to the sensor node via the wireless network. The sensor node is configured to dynamically load the sensor driver via the wireless network. The sensor node is configured to execute the sensor driver to promote communication with the sensor.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

### BRIEF DESCRIPTION OF THE DRAWINGS

The detailed description is described with reference to the accompanying figures. In the figures, the left-most digit(s) of a reference number identify the figure in which the reference number first appears. The use of the same reference number in different instances in the description and the figures may indicate similar or identical items.
FIG. 1 is a schematic block diagram illustration of a system for providing dynamic sensor driver loading over a wireless network in accordance with an example implementation of the present disclosure.
FIG. 2 is a schematic block diagram illustration of software modules surrounding a sensor driver in accordance with an example embodiment of the present disclosure.
FIG. 3 is a flow diagram illustrating a method for providing dynamic sensor driver loading (e.g., dynamically loading a sensor driver) over a wireless network in accordance with examples of the present disclosure.
FIG. 4 is a flow diagram illustrating a method of operation of a sensor node for providing dynamic sensor driver loading (e.g., dynamically loading a sensor driver) over a wireless network in accordance with examples of the present disclosure.

### DETAILED DESCRIPTION

### Overview

The benefits of wireless sensor networks are considerable. Following an incident, such as an attack, explosion or fire, the sensors may collect data and transmit threat-level information to a command and control center to keep people out of harm's way. Analysis of the data at the center gives commanders actionable information useful in developing an effective response. An intelligent and integrated network of CBRNE sensors that feed accurate data into the command and control center in a timely manner may be implemented.

In the event of a CBRNE incident, the objective is to alert the command and control operators quickly with real-time and accurate information regarding the presence of a hazardous substance in the area being monitored. The deployed sensor devices detect chemical, biological, radiological and explosive substances. Successful detection may be performed by precisely obtaining a current position of an alarming sensor. When the information is obtained, it may be reported to a remote base station.

Wireless sensor networks, such as Sensa-LINX^{™} networks developed by Smiths Detection, may be used to help first responders and military personnel to protect against and respond to CBRNE incidents. When a CBRNE event occurs, decision makers must receive information quickly to make effective choices to keep people and assets safe.

### Example Systems

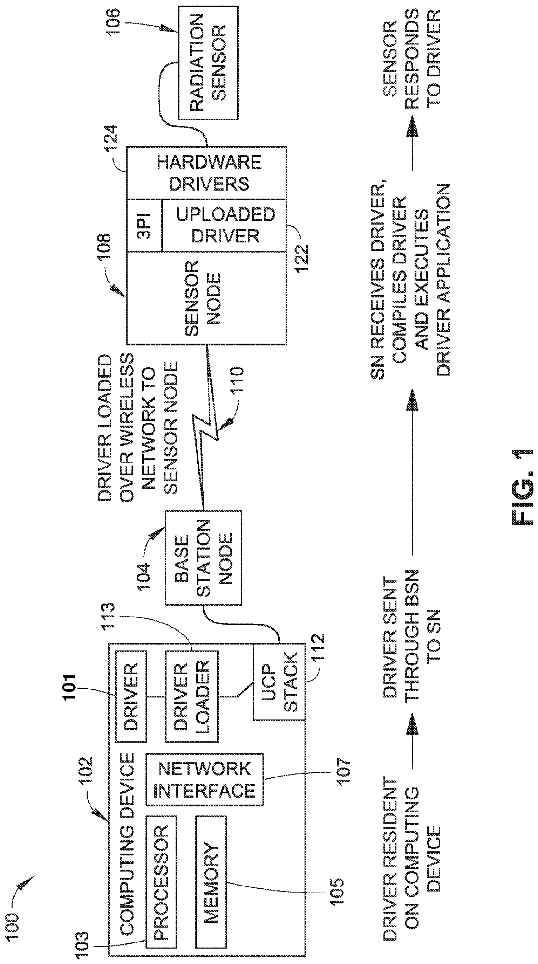

FIG. 1 shows a schematic block diagram of a system 100. For example, the system 100 may be a communications system, having a plurality of components forming a computer network, such as a wireless sensor network. In examples, the system 100 may be a wireless communication detection system. The system is a chemical, biological, radiological, nuclear and high-yield explosives (CBRNE) system. For example, the system 100 may be a Sensa-LINX^{™} system 100 developed by Smiths Detection. The term "computer network" may be defined herein as a telecommunications network that allows computers, nodes and/or sensors to exchange data. The physical connection(s) between networked computing devices may be established using cable media and/or wireless media. As will be described further herein, the system 100 is configured for providing dynamic loading of a sensor driver(s) 101 over a wireless network. As will be described further herein, the system 100 is configured for remotely loading sensor drivers over a wireless network to a node (e.g., computing platform).

As shown, the system 100 includes a computing device (e.g., computer) 102. The term "computer" may be defined herein as a computing device that can be programmed to carry out a finite set of arithmetic or logical operations. The computing device 102 may include a processor, such as a central processing unit (CPU). The processor 103 may be hardware within the computing device 102 that carries out the instructions of a computer program by performing the basic arithmetical, logical and input/output operations of the computing device 102. The computing device 102 may include a memory 105. The memory may be a physical device configured for storing programs (e.g., sequences of instructions) or data (e.g., program state information) on a temporary or permanent basis for use in the computing device 102.

The computing device 102 may include a network interface (e.g., a network interface controller) 107 which is a system (e.g., software and/or hardware) interface between the computing device 102 and other devices of the system 100, or between protocol layers in the system 100. For example, the network interface is used to connect the computing device 102 to the system 100. The processor 103, the memory 105, and the network interface 107 of the computing device 102 may be communicatively coupled. In examples, the computing device 102 may be a personal computer (PC) or laptop computer, such as a Sensa-LINX^{™} Command and Control (C2) PC developed by Smiths Detection.

The system 100 includes a first node 104. The first node 104 is a base station node (BSN). The base station node 104 may be a physical network node, such as an active electronic device attached to the system 100, and may be configured for sending, receiving and/or forwarding information over a communications channel. The base station node 104 is configured for being communicatively coupled with the computing device 102.

The computing device 102 is configured for storing a driver 101. The term "driver" as used herein may refer to a computer program that operates or controls a particular type of device that is attached to a computer. The driver 101 is a sensor driver, which is configured for operating, querying and/or controlling a CBRNE sensor(s) (e.g., a radiation sensor, a biosensor, a lightweight chemical detector (LCD) sensor, and so forth) 106 of the system 100. The term "sensor" as used herein may refer to a device (e.g., detector, converter, identifier) that measures a physical quantity and converts it into a signal which can be read by an observer or an instrument (e.g., an electronic instrument).

The system 100 includes a second node (e.g., a computing platform) 108. The second node 108 is a sensor node. The sensor node 108 may be a physical network node, such as an active electronic device and/or a specialized and rugged radio modem attached to the system 100, and may be configured for sending, receiving and/or forwarding information over a communications channel. The sensor node 108 is configured for being communicatively coupled with the base station node 104 via a wireless network 110 (e.g., the sensor node 108 is remotely located from the base station node 104 and/or the computing device 102. The term "wireless network" as used herein may refer to any type of computer network that utilizes a wireless connection. As shown, the sensor node 108 is communicatively coupled with the sensor (e.g., radiation sensor) 106. The radiation sensor 106 may be configured for detecting radiation in the proximity of the sensor 106 and generating a sensor output based upon the detected radiation. The sensor node(s) 108 is configured for receiving data from the sensor(s) 106 and transmitting the sensor data to the computing device (e.g., the C2) 102. The computing device 102 may include a user interface (e.g. graphical user interface (GUI)). The computing device 102 is configured to record, interpret and display the CBRNE sensor data sent via sensor node(s) 108. This may allow an operator of the computing device 102 to detect, identify, geographically locate and monitor potential CBRNE hazards, and to take appropriate protective measures in a timely and effective manner.

As mentioned above, the computing device 102 is configured for storing a driver 101 (e.g., a sensor driver). In embodiments, the sensor driver may be a JavaScript driver (e.g., a JavaScript sensor driver). The term "JavaScript" as used herein may refer to an interpreted computer programming language. The computing device 102 is configured for transmitting the driver to the sensor node 108 via the wireless network 110. For instance, upon initialization of an application (e.g., C2 application) of the computing device 102 and the sensor network, the C2 application may transmit the JavaScript sensor driver to the sensor node 108 over the wireless network 110, utilizing a proprietary communications protocol. The term "communications protocol" as used herein may refer to a system of digital rules for message exchange within or between computers. The proprietary communications protocol may be Universal Communications Protocol (UCP). A computer networking protocol suite defines/is the definition of the communications protocol, while a protocol stack (e.g., UCP stack) 112 is a software implementation of the protocol suite. A driver loader 113 of the computing device 102 may load the driver and may provide it to the UCP stack 112.

In examples, prior to reaching (e.g., being received by) the sensor node 108, the driver (e.g., JavaScript sensor driver) from the computing device 102 is directed to and received by (e.g., passes through) the base station node 104. The base station node 104 is configured for packaging the driver (e.g., placing the driver in a package). For example, the package may serve as a delivery vehicle for the driver that contains all of the components (e.g., software components) of the driver (e.g., software). Further, the package may provide a controlled mechanism for installation and removal of all components of the driver. The base station node 104 is configured for transmitting the packaged driver wirelessly (e.g., via the wireless network 110) to the sensor node 108. The base station node 104 may include a processor, memory and/or a network interface, which may be communicatively coupled with each other.

The sensor node 108 is configured for receiving the packaged driver transmitted by the base station node 104. The sensor node 108 is configured for unpackaging the driver (e.g., removing the driver from the package). The sensor node 108 is configured for compiling the driver 101. The term "compiling" may be defined herein as transforming source code written in programming language into another computer language (e.g., target language, machine code) to create an executable program. For example, the sensor node 108 may utilize a computer program (e.g., engine) for performing compiling, such as the V8 JavaScript engine, which is an open source engine developed by Google Inc. The V8 JavaScript engine may compile JavaScript to native machine code before executing it. Further, the V8 JavaScript engine may dynamically optimize and re-optimize the compiled code at runtime, based on heuristics of the code's execution profile. In embodiments, the sensor node 108 may use the engine to compile the driver into native machine code. For instance, the driver 101 is compiled into machine code in real time (e.g., dynamically). Further, the sensor node 108 may be configured to run (e.g., execute) the compiled driver (e.g., compiled application). For example, the engine (e.g., V8 JavaScript engine) utilized by the sensor node 108 may execute the compiled application. In examples, as the compiled application (e.g., driver) executes, it promotes (e.g., establishes) communication with the attached sensor 106. The sensor node 108 may include a processor, a memory and/or a network interface which are communicatively coupled with each other. The sensor 106 may include a processor, a memory and/or a network interface which are communicatively coupled with each other.

After the driver 101 (e.g., sensor driver) is received by the sensor node 108, the sensor driver can be stored in memory (e.g., flash memory) of the sensor node 108 individually, or along with other drivers, for re-use after a power cycle or a change of the sensor type. In examples, the driver 101 (e.g., JavaScript sensor driver) may be a specific driver designed to communicate with a specific sensor. In embodiments, when new sensors are added to the system 100, new sensor drivers may need to be developed.

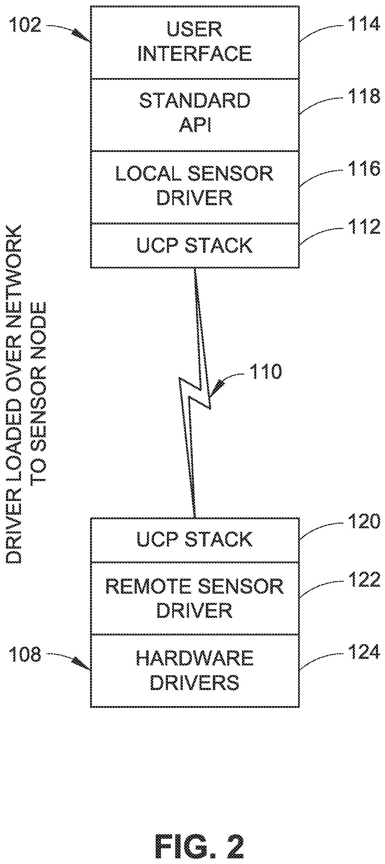

FIG. 2 shows a schematic block diagram of software modules surrounding the sensor driver (e.g., a software block diagram for sensor driver interaction). The depiction in FIG. 2 is depicting a scenario occurring after the driver 101 has been transmitted and compiled on the sensor node 108, so it is an operation scenario. The computing device 102 (e.g., the Sensa-LINX^{™} C2 PC) may include a user interface 114 (e.g., the C2 application). In examples, the C2 application 114 is configured to communicate with a local sensor driver 116 (e.g., of the computing device 102) via a standard Application Programmers Interface (API) 118. The local sensor driver 116 is configured for parsing data (e.g., information) transmitted from the sensor 106 and providing that data (e.g., information) to higher level modules through the API 118. The local sensor driver 116 is configured for transmitting signals (e.g., data, messages), via the UCP stack 112, to the remotely-located sensor 106 to request information from the sensor 106, or to command the sensor 106.

The sensor node 108 is configured for receiving and interpreting signals (e.g., data, information) transmitted from by the computing device 102. For example, a UCP stack 120 of the sensor node 108 interprets the information from the computing device (e.g., the C2) and passes that information (e.g., request) to sensor driver (e.g., remote sensor driver) 122 of the sensor node 108. The remote sensor driver 122 is configured to communicate with the attached sensor 106 through hardware drivers 124 of the sensor node 108.

In other embodiments, the system 100 may be configured such that, rather than compiling the driver 101 into machine code, the driver 101 is interpreted and executed in a virtual machine, such as a Java virtual machine. A virtual machine may be defined as a software implementation abstraction of underlying hardware, which is presented to an application layer of a system. A virtual machine may further be defined as a software implementation of a machine (e.g., computer) that executes programs like a physical machine. A Java virtual machine may be defined as a virtual machine that can execute Java bytecode. In embodiments, a virtual machine and build environment, such as JamaicaVM, may be utilized for developing and running real-time programs. In another example, an implementation of the Scheme programming language, such as Pocket Scheme may be used.

### Example Processes

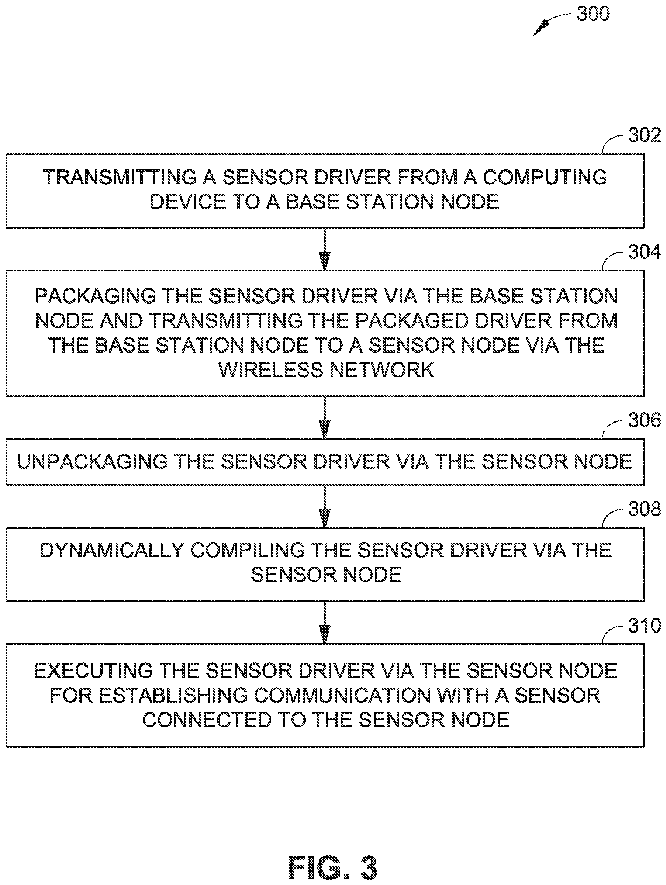

Referring to FIG. 3, a flowchart is shown which depicts a process method 300 for providing dynamic sensor driver loading (e.g., dynamically loading a sensor driver 101) over a wireless network in accordance with an exemplary embodiment of the present disclosure. The method 300 includes transmitting a sensor driver from a computing device to the base station node (Block 302). The method 300 may include packaging the sensor driver via the base station node and transmitting the packaged driver from the base station node to the sensor node via the wireless network (Block 304). The method 300 may include unpackaging the sensor driver via the sensor node (Block 306). The method 300 may include dynamically compiling the sensor driver via the sensor node (Block 308). The method 300 includes executing the sensor driver via the sensor node for promoting (e.g., establishing) communication with a sensor connected to the sensor node (Block 310).

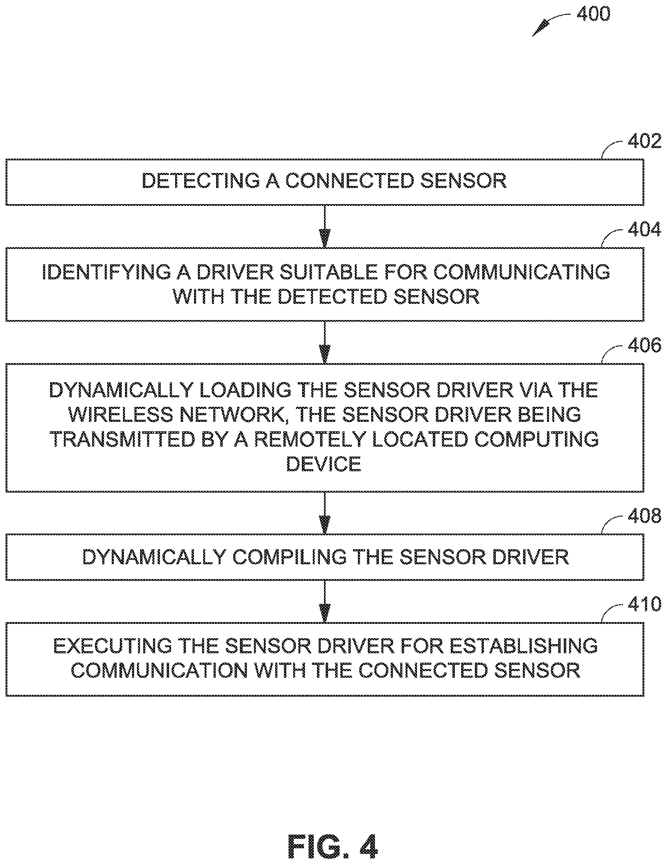

Referring to FIG. 4, a flowchart is shown which depicts a process method 400 of operation of a sensor node for providing dynamic sensor driver loading (e.g., dynamically loading a sensor driver 101) over a wireless network in accordance with an exemplary embodiment of the present disclosure. The method 400 may include detecting a connected sensor(s) (Block 402). For example, the sensor node 108 may be configured to detect when a sensor 106 is connected to the sensor node 108. The method 400 may include identifying a driver(s) suitable for communicating with the detected sensor(s) (Block 404). For instance, the sensor node 108 may be configured for identifying the type of sensor 106 connected to it, and based upon that, may be further configured for identifying what type of sensor driver the sensor node 108 will need in order to communicate with the sensor 106.

The method 400 includes dynamically loading the sensor driver via the wireless network, the sensor driver being transmitted by a remotely located computing device (Block 406). For example, after the sensor node 108 determines which sensor driver it needs for communication with the sensor 106, it dynamically loads (e.g., uploads) the sensor driver via the wireless network 110. The method 400 may further include dynamically compiling the sensor driver (Block 408). The method 400 may further include executing the sensor driver for promoting (e.g., establishing) communication with the connected sensor (Block 410). For instance, the sensor node 108 may dynamically compile and execute the sensor driver using an open source engine, such as V8 JavaScript engine.

The herein described system 100 and methods (300, 400) which provide dynamic loading of the driver needed to communicate with the sensor, may promote reduction in the number of software changes required to node(s) (e.g., sensor node, base station node) which are attached to the sensor(s).

The herein described system 100 and/or methods (300, 400) by providing dynamic driver loading over a wireless network 110 as described, may eliminate the need to update multiple software module when new sensors are added, thereby promoting reduced development time. The herein described system 100 and/or methods (300, 400) by providing dynamic driver loading as described, may promote reduced risk in the amount of changes needed to add new sensors. The herein described system 100 and/or methods (300, 400) by providing dynamic driver loading as described, may allow for updates to software drivers to be localized, thereby making it easier to find bugs or logic errors in the software.

The herein described system 100 and/or methods (300, 400) by providing dynamic driver loading as described, may allow for new sensors to be added without the need to provide new software versions. For example, drivers (e.g., JavaScript drivers) may be loaded into a local directory and utilized without the need to rebuild the software, thereby making maintenance and upgrades easier. In the herein described system 100, since the drivers are compiled into native machine code, the software may (e.g., should) run (e.g., execute) faster than if it were utilized in an interpreted manner.

Although the subject matter has been described in language specific to structural features and/or methodological acts, it is to be understood that the subject matter defined in the appended claims is not necessarily limited to the specific features or acts described. Although various configurations are discussed the apparatus, systems, subsystems, components and so forth can be constructed in a variety of ways without departing from this disclosure. Rather, the specific features and acts are disclosed as example forms of implementing the claims.

## Claims

1. A chemical, biological, radiological, nuclear and high-yield explosives, CBRNE, system (100), comprising:
a computing device (102);
a base station node (104) communicatively coupled with the computing device (102);
a sensor node (108) communicatively coupled with the base station node (104) via a wireless network; and
a CBRNE sensor (106) configured to detect chemical, biological, radiological and/or explosive substances, wherein the CBRNE sensor (106) is communicatively coupled with the sensor node (108),
wherein the computing device (102) is configured to transmit a sensor driver (101) to the base station node (104) and the base station node (104) is configured to transmit the sensor driver to the sensor node (108) via the wireless network, the sensor node (108) being configured to dynamically load the sensor driver,
the sensor node (108) being configured to execute the sensor driver to establish communication between the computing device (102) and the CBRNE sensor (106),
wherein the sensor driver (108) is configured for operating, querying and/or controlling the CBRNE sensor (106);
wherein the CBRNE sensor (106) is configured to collect and transmit CBRNE sensor data to the computing device (102); and
wherein the computing device (102) is configured to record, interpret and display the CBRNE sensor data.

2. The system as claimed in claim 1, wherein the sensor driver is a JavaScript driver.

3. The system as claimed in claim 1, wherein the sensor node (108) is configured to dynamically compile the sensor driver.

4. The system as claimed in claim 1, wherein the sensor driver is interpreted and executes in a virtual machine.

5. A method for providing dynamic sensor driver loading over a wireless network, the method comprising:
transmitting a sensor driver (101) from a computing device (102) to a base station node (104);
transmitting the sensor driver from the base station node (104) to a sensor node (108) via the wireless network;
dynamically loading the sensor driver at the sensor node (108);
executing the sensor driver at the sensor node (108) to establish communication between the computing device (102) and a sensor (106) communicatively coupled with the sensor node (108);
wherein the sensor driver is configured for operating, querying and/or controlling the sensor (106);
wherein the sensor (106) is a chemical, biological, radiological, nuclear and high-yield explosives, CBRNE, sensor configured to detect chemical, biological, radiological, nuclear and/or explosive substances;
wherein the CBRNE sensor is configured to collect and transmit CBRNE sensor data to the computing device (102); and
wherein the computing device (102) is configured to record, interpret and display the CBRNE sensor data.

6. The method as claimed in claim 5, further comprising:
prior to executing the sensor driver, dynamically compiling the sensor driver via the sensor node.

7. The method as claimed in claim 6, wherein the computing device utilizes a proprietary communications protocol for transmitting the sensor driver.

8. The method as claimed in claim 7, wherein the sensor driver is interpreted and executes in a virtual machine.

## Patentansprüche

1. Ein chemisches, biologisches, radiologisches, nukleares und Hochexplosivstoffe-System, CBRNE-System, (100), das Folgendes umfasst:
eine Rechenvorrichtung (102);
einen Basisstationsknoten (104), der mit der Rechenvorrichtung (102) kommunikativ gekoppelt ist;
einen Sensorknoten (108), der mit dem Basisstationsknoten (104) über ein drahtloses Netzwerk kommunikativ gekoppelt ist; und
einen CBRNE-Sensor (106), der konfiguriert ist, um chemische, biologische, radiologische und/oder explosive Substanzen zu detektieren, wobei der CBRNE-Sensor (106) mit dem Sensorknoten (108) kommunikativ gekoppelt ist,
wobei die Rechenvorrichtung (102) konfiguriert ist, um einen Sensortreiber (101) an den Basisstationsknoten (104) zu übertragen, und der Basisstationsknoten (104) konfiguriert ist, um den Sensortreiber an den Sensorknoten (108) über das drahtlose Netzwerk zu übertragen, wobei der Sensorknoten (108) konfiguriert ist, um den Sensortreiber dynamisch zu laden, wobei der Sensorknoten (108) konfiguriert ist, um den Sensortreiber auszuführen, um eine Kommunikation zwischen der Rechenvorrichtung (102) und dem CBRNE-Sensor (106) herzustellen,
wobei der Sensortreiber (108) zum Betreiben, Abfragen und/oder Steuern des CBRNE-Sensors (106) konfiguriert ist;
wobei der CBRNE-Sensor (106) konfiguriert ist, um CBRNE-Sensordaten zu sammeln und an die Rechenvorrichtung (102) zu übertragen; und
wobei die Rechenvorrichtung (102) konfiguriert ist, um die CBRNE-Sensordaten aufzuzeichnen, zu interpretieren und anzuzeigen.

2. Das System nach Anspruch 1, wobei der Sensortreiber ein JavaScript-Treiber ist.

3. Das System nach Anspruch 1, wobei der Sensorknoten (108) konfiguriert ist, um den Sensortreiber dynamisch zu kompilieren.

4. Das System nach Anspruch 1, wobei der Sensortreiber in einer virtuellen Maschine interpretiert und ausgeführt wird.

5. Ein Verfahren zum Bereitstellen eines dynamischen Sensortreiberladens über ein drahtloses Netzwerk, wobei das Verfahren Folgendes umfasst:
Übertragen eines Sensortreibers (101) von einer Rechenvorrichtung (102) an einen Basisstationsknoten (104);
Übertragen des Sensortreibers von dem Basisstationsknoten (104) an einen Sensorknoten (108) über das drahtlose Netzwerk;
dynamisches Laden des Sensortreibers an dem Sensorknoten (108) ;
Ausführen des Sensortreibers an dem Sensorknoten (108), um eine Kommunikation zwischen der Rechenvorrichtung (102) und einem Sensor (106), der mit dem Sensorknoten (108) kommunikativ gekoppelt ist, herzustellen;
wobei der Sensortreiber zum Betreiben, Abfragen und/oder Steuern des Sensors (106) konfiguriert ist;
wobei der Sensor (106) ein chemischer, biologischer, radiologischer und Hochexplosivstoffe-Sensor, CBRNE-Sensor ist, der konfiguriert ist, um chemische, biologische, radiologische und/oder explosive Substanzen zu detektieren.
wobei der CBRNE-Sensor konfiguriert ist, um CBRNE-Sensordaten zu sammeln und an die Rechenvorrichtung (102) zu übertragen; und
wobei die Rechenvorrichtung (102) konfiguriert ist, um die CBRNE-Sensordaten aufzuzeichnen, zu interpretieren und anzuzeigen.

6. Das Verfahren nach Anspruch 5, das ferner Folgendes umfasst:
vor dem Ausführen des Sensortreibers, dynamisches Kompilieren des Sensortreibers über den Sensorknoten.

7. Das Verfahren nach Anspruch 6, wobei die Rechenvorrichtung ein proprietäres Kommunikationsprotokoll zum Übertragen des Sensortreibers benutzt.

8. Das Verfahren nach Anspruch 7, wobei der Sensortreiber in einer virtuellen Maschine interpretiert und ausgeführt wird.

## Revendications

1. Système chimique, biologique, radiologique, nucléaire et d'explosifs de grande puissance, CBRNE, (100) comprenant :
un dispositif informatique (102) ;
un nœud de station de base (104) couplé en communication avec le dispositif informatique (102) ;
un nœud de capteur (108) couplé en communication avec le nœud de station de base (104) via un réseau sans fil ; et
un capteur CBRNE (106) configuré pour détecter des substances chimiques, biologiques, radiologiques et/ou explosives, dans lequel le capteur CBRNE (106) est couplé en communication avec le nœud de capteur (108),
dans lequel le dispositif informatique (102) est configuré pour transmettre un pilote de capteur (101) au nœud de station de base (104) et le nœud de station de base (104) est configuré pour transmettre le pilote de capteur au nœud de capteur (108) via le réseau sans fil, le nœud de capteur (108) étant configuré pour charger dynamiquement le pilote de capteur, le nœud de capteur (108) étant configuré pour exécuter le pilote de capteur pour établir une communication entre le dispositif informatique (102) et le capteur CBRNE (106),
dans lequel le pilote de capteur (108) est configuré pour faire fonctionner, interroger et/ou commander le capteur CBRNE (106) ;
dans lequel le capteur CBRNE (106) est configuré pour collecter et transmettre des données de capteur CBRNE au dispositif informatique (102) ; et
dans lequel le dispositif informatique (102) est configuré pour enregistrer, interpréter et afficher les données du capteur CBRNE.

2. Système selon la revendication 1, dans lequel le pilote de capteur est un pilote JavaScript.

3. Système selon la revendication 1, dans lequel le nœud de capteur (108) est configuré pour compiler dynamiquement le pilote de capteur.

4. Système selon la revendication 1, dans lequel le pilote de capteur est interprété et s'exécute dans une machine virtuelle.

5. Procédé pour fournir un chargement dynamique de pilote de capteur sur un réseau sans fil, le procédé comprenant de :
transmettre un pilote de capteur (101) à partir d'un dispositif informatique (102) à un nœud de station de base (104) ;
transmettre le pilote de capteur à partir du nœud de station de base (104) à un nœud de capteur (108) via le réseau sans fil ;
charger dynamiquement le pilote de capteur au niveau du nœud de capteur (108) ;
exécuter le pilote de capteur au niveau du nœud de capteur (108) pour établir une communication entre le dispositif informatique (102) et un capteur (106) couplé en communication avec le nœud de capteur (108) ;
dans lequel le pilote de capteur est configuré pour faire fonctionner, interroger et/ou commander le capteur (106) ;
dans lequel le capteur (106) est un capteur chimique, biologique, radiologique, nucléaire et d'explosifs de grande puissance, CBRNE, configuré pour détecter des substances chimiques, biologiques, radiologiques, nucléaires et/ou explosives ;
dans lequel le capteur CBRNE est configuré pour collecter et transmettre des données de capteur CBRNE au dispositif informatique (102) ; et
dans lequel le dispositif informatique (102) est configuré pour enregistrer, interpréter et afficher les données du capteur CBRNE.

6. Procédé selon la revendication 5, comprenant en outre de :
avant d'exécuter le pilote de capteur, compiler dynamiquement le pilote de capteur via le nœud de capteur.

7. Procédé selon la revendication 6, dans lequel le dispositif informatique utilise un protocole de communication propriétaire pour transmettre le pilote de capteur.

8. Procédé selon la revendication 7, dans lequel le pilote de capteur est interprété et s'exécute dans une machine virtuelle.
